# EUROPÄISCHE PATENTSCHRIFT

(11) **EP 1 633 606 B1**
(45) Veröffentlichungstag und Bekanntmachung des Hinweises auf die Patenterteilung: **07.02.2007**
(21) Anmeldenummer: 04720842.6
(22) Anmeldetag: 16.03.2004
(51) Int. Cl.: B60R 21/01, B60N 2/427, B60N 2/02

(54) **INSASSENSCHUTZSYSTEM FÜR FAHRZEUGE UND VERFAHREN ZUM BETÄTIGEN EINES INSASSENSCHUTZSYSTEMS FÜR FAHRZEUGE**
OCCUPANT PROTECTION SYSTEM FOR VEHICLES AND METHOD FOR ACTUATING AN OCCUPANT PROTECTION SYSTEM FOR VEHICLES
SYSTEME DE PROTECTION D'OCCUPANT POUR VEHICULES, ET PROCEDE POUR ACTIONNER UN TEL SYSTEME

(30) Priorität: 15.05.2003 DE 10321871
(43) Veröffentlichungstag der Anmeldung: 15.03.2006
(73) Patentinhaber: ROBERT BOSCH GMBH, 70442 Stuttgart (DE)
(72) Erfinder: MATTES, Bernhard, 74343 Sachsenheim (DE); STUMPP, Hans-Peter, 71706 Markgroeningen (DE); NITSCHKE, Werner, 71254 Ditzingen (DE); SCHUMACHER, Hartmut, 71691 Freiberg (DE); WOTTRENG, Walter, 370-23 Gumna-Ken (JP); GUETTLER, Hans, 74199 Untergruppenbach (DE); MORITZ, Rainer, 70794 Filderstadt (DE); HERRMANN, Thomas, 74613 Oehringen (DE); STUETZLER, Frank-Juergen, Farmington Hills, MI 48331 (US); VOGT, Alexander, 70176 Stuttgart (DE); BALZER, Knut, 71717 Beilstein (DE); LICH, Thomas, 71409 Schwaikheim (DE); GROEGER, Ulrike, 70499 Stuttgart (DE); KUTTENBERGER, Alfred, 71696 Moeglingen (DE); GROESCH, Lothar, Farmington Hills, MI 48331 (US); SCHMID, Michael, 70806 Kornwestheim (DE); KROENINGER, Mario, 77815 Buehl (DE)
(86) Internationale Anmeldenummer: PCT/DE2004/000524
(87) Internationale Veröffentlichungsnummer: WO 2004/103779

(56) Entgegenhaltungen:
- EP-A- 1 029 736
- EP-A- 1 369 310
- DE-A- 19 749 838
- US-A- 5 694 320
- US-A1- 2002 188 393

## Beschreibung

### STAND DER TECHNIK

Die vorliegende Erfindung betrifft ein Insassenschutzsystem für Fahrzeuge und ein Verfahren zum Betätigen eines Insassenschutzsystems für Fahrzeuge, und insbesondere ein mit Sensoren zur Überwachung des Umfeldes eines Fahrzeugs und mit einem adaptiven Sitzsystem ausgestattetes Insassenschutzsystem für Fahrzeuge.

Auf dem Gebiet der Insassensicherheit bei Kraftfahrzeugen ist derzeit ein System verfügbar (Presave für die S-Klasse von Mercedes-Benz), bei welchem im Falle einer Notbremsung bzw. bei einem Schleudervorgang des Fahrzeugs Gurtstraffer angesteuert werden, um eine eventuell vorhandene Gurtlose, d.h. einen nicht anliegenden Gurt, zu reduzieren. Zusätzlich werden die normalen Elektromotoren für die Komfortsitzeinstellung in Längsrichtung, die Sitzkissenneigung und die Sitzlehne aktiviert, um den Insassen in eine sichere Position für einen möglichen Unfall zu bringen.

Diese Betätigungen der Standard-Sitzeinstellungen benötigen aufgrund der Ansteuerung der normalen Elektromotoren, welche der Komforteinstellung dienen, viel Zeit, die sich im Bereich von Sekunden bewegt. Die Aktionen dieses bekannten Systems sind folglich nur zielführend, d.h. eine Insassenschutzverbesserung aufweisend, wenn ausreichend viel Zeit bis zu einem möglichen Unfall zur Verfügung steht. Bei einer Notbremsung oder einem Schleudervorgang, welcher bei dem bekannten System durch Querbeschleunigungssensoren in Verbindung mit Rad- und Lenkwinkelsensoren detektiert wird, bleibt unter Umständen genügend Zeit zu einer Sitzeinstellungskorrektur. Die zur Detektion eingesetzte Sensorik im Presave-System wird in erster Linie bei Fahrstabilitätssystemen wie ESP, ABS und einem Bremsassistenten eingesetzt. Durch dieses System sind jedoch nur wenige Unfallarten (lediglich nach einer Notbremsung oder Schleudern des Fahrzeugs) zur Auslösung der begrenzten Schutzmechanismen abgedeckt.

US-A-2002/0188393 zeigt die Merkmale des Oberbegriffs der Ansprüche 1 und 11.

### VORTEILE DER ERFINDUNG

Das erfindungsgemäße Insassenschutzsystem für Fahrzeuge mit den Merkmalen des Anspruchs 1 und das Verfahren zum Betätigen eines Insassenschutzsystems für Fahrzeuge mit den Merkmalen des Anspruchs 10 weist gegenüber dem bekannten Lösungsansatz (Presave) den Vorteil auf, dass durch eine Sensoreinrichtung zum Detektieren des Umfeldes um das Fahrzeug in Verbindung mit schnellen Aktuatoren ein Sitz auch in Fällen sicher aktivierbar ist, in denen weder eine Notbremsung noch ein Schleudervorgang des Fahrzeugs, d.h. nur eine kurze Zeit zum Ergreifen von Schutzmaßnahmen, vorliegt. Dadurch wird ein verbesserter Insassenschutz im Falle eines möglichen Unfalls gewährleistet.

Die der vorliegenden Erfindung zugrunde liegende Idee besteht im wesentlichen darin, den Einsatz von vorausschauender Sensorik eines Fahrzeugs in Verbindung mit einer schnellen Aktuatorik im Fahrzeugsitz zu kombinieren, und somit einen Insassen auch in den Fällen auf einen Unfall vorbereitet, in denen kein Notbremseingriff oder Schleudern des Fahrzeugs detektierbar ist.

Mit anderen Worten wird ein Insassenschutzsystem für Fahrzeuge bereitgestellt, mit: zumindest einem Sensor, der das Umfeld des Fahrzeugs erfaßt und daraus Sensorsignale erzeugt; einer Auswerteeinrichtung, welche die Sensorsignale auswertet, die nach Maßgabe eines Algorithmus zur Früherkennung einer Gefahrensituation eine nahende Gefahrensituation vorzeitig erkennt und in diesem Fall ein Auslösesignal erzeugt; einer Sitzverstelleinrichtung mit mindestens einem Aktuator zum Verstellen eines Sitzes, wobei die Sitzverstelleinrichtung eine erste Geschwindigkeit zur Komforteinstellung des Sitzes und eine zweite, höhere Geschwindigkeit zur Sitzadaption des Sitzes bei Ansteuerung mit dem Auslösesignals aufweist..

In den Unteransprüchen finden sich vorteilhafte Weiterbildungen und Verbesserungen des im Anspruch 1 angegebenen Insassenschutzsystems für Fahrzeuge.

Gemäß einer weiteren bevorzugten Weiterbildung deformiert der mindestens einen Aktuator die Sitzflächen und/oder die Kopfstütze des Sitzes in Abhängigkeit der von einer Auswerteeinrichtung ausgewerteten Sensorsignale jeweils mit der zweiten Adaptionsgeschwindigkeit reversibel und/oder positioniert die Sitzstellung bezüglich eines Lenkrades reversibel. Durch die Reversibilität der entsprechenden Einrichtungen wird das Auftreten zusätzlicher Kosten nach einem Auslösen vermieden.

Gemäß einer weiteren bevorzugten Weiterbildung wird der mindestens eine Aktuator durch ein pneumatisches System, einen Hochgeschwindigkeits-Elektromotor oder eine elektromotorisch spannbare, mechanische Federeinrichtung gebildet, welcher vorzugsweise in unter 1 Sekunde in seine Endposition auslöst. Diese vorteilhafte High-Speed-Aktuatorik bietet verbesserte Schutzmöglichkeiten eines Insassen bei einer möglichen Reversibilität der Aktuatoren des Sitzes.

Gemäß einer weiteren bevorzugten Weiterbildung ist ein Sitzkeil am Ende der im wesentlichen waagrechten Sitzfläche vorgesehen, welcher bei Auftreten des Auslösesignals die Sitzfläche nach oben hin deformiert. Dies birgt den Vorteil im Falle eines möglichen Unfalls das sogenannte "Submarining", d.h. das Abtauchen unter dem Gurt, aktiv zu vermeiden.

Gemäß einer weiteren bevorzugten Weiterbildung ist der Sitz bei Auftreten des Auslösesignals durch mindestens einen Aktuator in Richtung einer Sitzbefestigungseinrichtung am Fahrzeugboden und/oder weg vom Lenkrad positionierbar. Dadurch wird ein größerer Abstand zum Fahrzeugdach und/oder zum Lenkrad im Falle einer Gefahrensituation vorgesehen.

Gemäß einer weiteren bevorzugten Weiterbildung weist der Sitz im hinteren Bereich der im wesentlichen waagrechten Sitzfläche eine durch einen Aktuator nach unten bewegliche Einrichtung auf, welche bei Auftreten des Auslösesignals eine Vertiefung im hinteren Bereich der Sitzfläche erzeugt. Dadurch wird auf vorteilhafte Weise ebenfalls das sogenannte "Submarining" gegebenenfalls im Zusammenspiel mit einem reversiblen Gurtstraffer vermieden.

Gemäß einer weiteren bevorzugten Weiterbildung weist die im wesentlichen senkrechte Sitzfläche bei Auftreten des Auslösesignals seitlich ausfahrbare Sitzwangen auf. Durch ein Betätigen dieser Sitzseitenpolster, d.h. ein Aufstellen der Sitzwangen, wird ein Verrutschen des Insassen in seitlicher Richtung vorteilhaft reduziert.

Gemäß einer weiteren bevorzugten Weiterbildung ist bei Auftreten des Auslösesignals ein Kragen aus der Kopfstütze und/oder ein Kopfschutzpolster aus dem Dach des Fahrzeuges über den Sitz ausfahrbar. So können Pendelbewegungen des Kopfes während eines möglichen Unfalles vermieden werden bzw. im Falle eines Überschlags ein Kontakt mit dem harten Dach vermieden werden.

Gemäß einer weiteren bevorzugten Weiterbildung weist die Sensoreinrichtung an der Peripherie des Fahrzeugs Radarsensoren und/oder Videosensoren und/oder laserscannerbasierte Sensoren, insbesondere zur Fahrzeugvorfeldüberwachung, auf. Auf diese Weise kann vorteilhaft das Umfeld um das Fahrzeug auf eventuelle Gefahrensituationen hin vorausschauend überwacht werden.

### ZEICHNUNGEN

Ausführungsbeispiele der Erfindung sind in den Zeichnungen dargestellt und in der nachfolgenden Beschreibung näher erläutert.

Es zeigen:
- Fig. 1: eine schematische Draufsicht auf einen Pkw mit sensorischer Vorfeldüberwachung zur Erläuterung eines Aspekts der vorliegenden Erfindung;
- Fig. 2: eine schematische Seiten-/Querschnittsansicht eines Sitzes zur Erläuterung eines Aspekts gemäß einer Ausführungsform der vorliegenden Erfindung.

### BESCHREIBUNG DER AUSFÜHRUNGSBEISPIELE

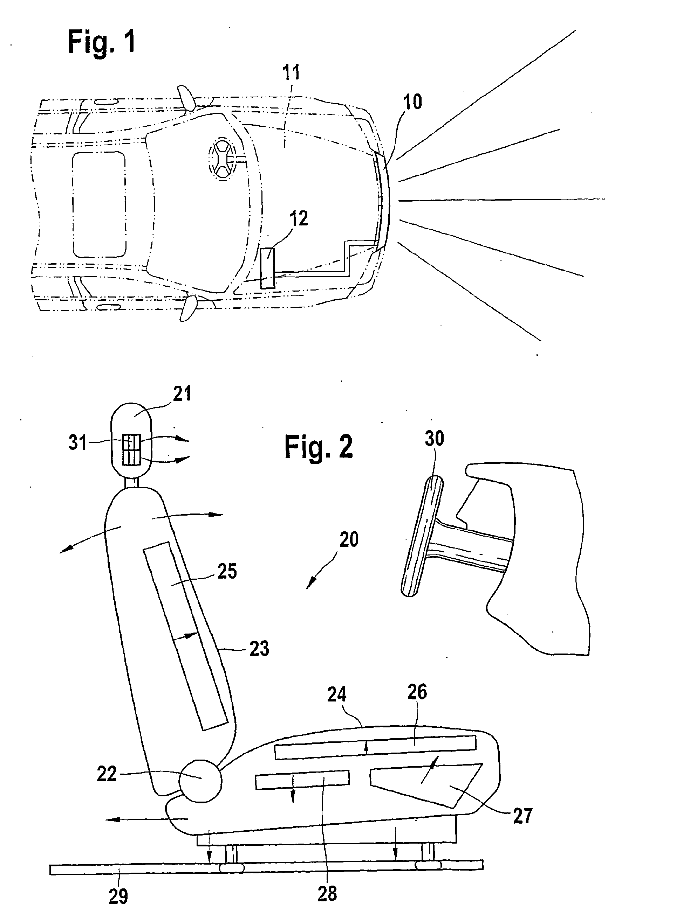

In Fig. 1 ist eine Sensoreinrichtung 10 mit mindestens einem Sensor im vorderen Bereich eines Fahrzeugs 11 zur Überwachung des Fahrzeugumfeldes, insbesondere des Fahrzeugumfeldes in Fahrtrichtung und/oder entgegengesetzt der Fahrtrichtung, dargestellt. Die Sensoreinrichtung 10 ist mit einer Auswerteeinrichtung 12 verbunden und weist beispielsweise Radarsensoren, Videosensoren und/oder laserscannerbasierte Sensoren (Lidar) auf. Die Sensoreinrichtung 10 ist vorzugsweise um das gesamte Fahrzeug und somit zur Erfassung des gesamten Umfeldes um das Fahrzeug angeordnet. In der Auswerteeinrichtung 12 werden die von der Sensoreinrichtung 10 erfassten Sensorsignale analysiert und verarbeitet. Wird nun anhand der von der Auswerteeinrichtung 12 analysierten Sensorsignale ein möglicher Unfall detektiert, in den das Fahrzeug 11 verwickelt wird, so steuert die Auswerteeinrichtung 12 eine umfangreiche Aktorik, insbesondere eines Sitzes 20 gemäß Fig. 2, an.

Der in Abhängigkeit der von der Auswerteeinrichtung 12 gemäß Fig. 1 durch die Sensoreinrichtung 10 erfassten Sensorsignale adaptive Sitz 20 weist zwei Adaptionsgeschwindigkeiten auf. Eine erste Adaptionsgeschwindigkeit dient der Komforteinstellung des Sitzes 20. Eine Zweite Adaptionsgeschwindigkeit des adaptiven Sitzes 20 liegt über der ersten Adaptionsgeschwindigkeit. Sie ist für ein schnelles Anpassen des Sitzes 20 bei Auftreten eines von der Auswerteeinrichtung 12 erzeugten Auslösesignals in einem von der Sensoreinrichtung 10 erfassten Gefahrenfall, wie z.B. einem möglichen Unfall, vorgesehen. Der Sitz 20 weist eine adaptive Kopfstütze 21 auf. Über einen Aktuator 22 ist sowohl die im wesentlichen senkrechte Sitzfläche 23, d.h. die Sitzlehne, verstellbar, als auch der Sitz 20 in seiner Gesamtheit, insbesondere die im wesentlichen waagrechte Sitzfläche 24, nach vorne oder hinten verschiebbar. Seitliche durch Aktuatoren betätigbare Sitzwangen 25 und 26 können im Fall eines detektierten möglichen Unfalls aus den Sitzflächen 23, 24 hervortreten, um eine bessere Seitenführung und damit einen besseren Schutz eines Insassens zu gewährleisten. Vorzugsweise werden die hierin beschriebenen Aktuatoren durch die gleiche elektronische Ansteuereinrichtung (nicht dargestellt) wie die Komfortsitzverstellung angesteuert, d.h. sowohl mit der ersten als auch mit der zweiten, höheren Geschwindigkeit.

Ein im vorderen Bereich der im wesentlichen waagrechten Sitzfläche 24 angeordneter Sitzkeil 27, welcher ebenfalls von einem Aktuator betätigbar ist, kann ebenfalls bei einem prognostizierten Unfall nach oben bewegt werden, um insbesondere im Zusammenspiel mit einem in Fig. 2 nicht dargestellten reversiblen Gurtstraffer ein Abtauchen unter den Sitzgurt und damit ein Durchrutschen, sogenanntes "Submarining", eines Insassens zu verhindern. Einen vergleichbaren Effekt, vorzugsweise im Zusammenspiel mit einem reversiblen Gurtstraffer, erzielt die bei einem prognostizierten Unfall nach unten bewegbare Einrichtung 28, beispielsweise eine Platte im hinteren Bereich der im wesentlichen waagrechten Sitzfläche 24. Der Sitz 20 ist vorzugsweise in einer Sitzschiene 29 am Fahrzeugboden befestigt und kann in Abhängigkeit der ausgewerteten Sensordaten in kurzer Zeit, vorzugsweise weniger als 1 Sekunde, mit Bezug auf ein Lenkrad 30 verlagert werden. In der Kopfstütze 21 ist vorzugsweise eine über einen Aktuator betätigbare Kopf-/Halskrause 31 bzw. Kragen vorgesehen, welche reversibel ausfahrbar ist.

Jegliche durch einen Aktuator 22, 25, 26, 27, 28, 31 betätigbare Einrichtung ist vorzugsweise reversibel betätigbar. Die Aktuatoren sind z.B. Hochgeschwindigkeits-Elektromotoren, ein Pneumatiksystem oder beispielsweise eine elektromotorisch reversible mechanische Federeinrichtung. Mit einer solchen Aktuatorik können im Sitz 20 folgende Aktionen reversibel ausgelöst werden: Sitz 20 nach unten fahren, um mehr Abstand zum Dach (nicht dargestellt) vorzusehen; Sitzkeil 27 im vorderen Sitzbereich der im wesentlichen waagrechten Sitzfläche 24 aktivieren, um das "Submarining" zu vermeiden; Erzeugen einer Vertiefung im hinteren Sitzbereich der im wesentlichen waagrechten Sitzfläche 24, um das "Submarining" im Zusammenspiel mit einem reversiblen Gurtstraffer zu vermeiden; seitliche Sitzwangen 25, 26 aufstellen, um ein Verrutschen des/der Insassen(s) zu vermeiden; Kopfschutz aus dem Dach ausfahren (in Fig. 2 nicht dargestellt), um im Falle eines Überschlages einen harten Kontakt mit dem Dach zu vermeiden; gepolsterte Einrichtung 31 aus der Kopfstütze zu einer Art Kragen ausfahren, um Pendelbewegungen des Kopfes während eines möglichen Unfalls zu vermeiden.

Darüber hinaus werden gemäß der vorliegenden Erfindung die im vorangehenden erläuterten reversiblen und irreversible Rückhaltemittel, wie beispielsweise pyrotechnisch gezündete Airbags, vorzugsweise auf Basis der in der Auswerteeinrichtung 12 erfassten Daten, aufeinander abgestimmt. Außerdem wird auf diese Weise für den Insassen der Einsatz der Sicherheitseinrichtung praktisch erlebbar und dient zusätzlich als Warnfunktion in kritischen Verkehrssituationen, wobei keine zusätzlichen Kosten nach einem Auslösen aufgrund der Reversibilität der Aktuatorik in dem Sitz gegeben sind.

Obwohl die vorliegende Erfindung vorstehend anhand eines bevorzugten Ausführungsbeispiels beschrieben wurde, ist sie darauf nicht beschränkt, sondern auf vielfältige Weise modifizierbar.

So sind auch andere Sensoren als die beschriebenen zur Überwachung des Umfelds des Fahrzeugs, wie z.B. Ultraschall- oder Infrarot-Sensoren, vorstellbar. Ebenso ist die Aufzählung der beschriebenen Aktuatoren beispielhaft und nicht abschließend zu verstehen.

Obwohl auf beliebige Fahrzeuge, wie etwa Schnellboote, Flugzeuge, Lastkraftwagen, usw., anwendbar, wird die vorliegende Erfindung sowie die ihr zugrunde liegende Problematik mit Bezug auf einen Personenkraftwagen erläutert.

## Patentansprüche

1. Insassenschutzsystem für Fahrzeuge mit:
zumindest einem Sensor (10), der das Umfeld des Fahrzeugs (11) erfasst und daraus Sensorsignale erzeugt;
einer Auswerteeinrichtung (12), welche die Sensorsignale auswertet, die nach Maßgabe eines Algorithmus zur Früherkennung einer Gefahrensituation eine nahende Gefahrensituation vorzeitig erkennt und in diesem Fall ein Auslösesignal erzeugt;
einer Sitzverstelleinrichtung (22, 25, 26, 27, 28) mit mindestens einem Aktuator zum Verstellen eines Sitzes (20), **dadurch gekennzeichnet dass** die Sitzverstelleinrichtung (22, 25, 26, 27, 28) eine erste Geschwindigkeit zur Komforteinstellung des Sitzes (20) und eine zweite, höhere Geschwindigkeit zur Adaption des Sitzes (20) bei Ansteuerung mit dem Auslösesignal aufweist.

2. Fahrzeuginsassen-Schutzsystem nach Anspruch 1,
**dadurch gekennzeichnet,**
**dass** die Sitzflächen (23, 24) und/oder die Kopfstütze (21) des Sitzes (20) in Abhängigkeit der von einer Auswerteeinrichtung (12) ausgewerteten Sensorsignale jeweils mit der zweiten Geschwindigkeit reversibel deformierbar sind, und/oder die Sitzstellung bezüglich eines Lenkrades (30) reversibel positionierbar ist.

3. Fahrzeuginsassen-Schutzsystem nach einem der vorangehenden Ansprüche,
**dadurch gekennzeichnet,**
**dass** der mindestens eine Aktuator (22, 25, 26, 27, 28) durch ein pneumatisches System, einen Hochgeschwindigkeits-Elektromotor oder eine elektromotorisch spannbare, mechanische Federeinrichtung gebildet ist, welcher den Sitz vorzugsweise in unter 1 Sekunde in eine vorbestimmte Endposition bringt.

4. Fahrzeuginsassen-Schutzsystem nach einem der vorangehenden Ansprüche,
**dadurch gekennzeichnet,**
**dass** ein Sitzkeil (27) am vorderen Ende der im wesentlichen waagrechten Sitzfläche (24) vorgesehen ist, welcher bei Auftreten des Auslösesignals die Sitzfläche (24) nach oben hin deformiert.

5. Fahrzeuginsassen-Schutzsystem nach einem der vorangehenden Ansprüche,
**dadurch gekennzeichnet,**
**dass** der Sitz (20) einen Aktuator (22) aufweist, der den Sitz (20) bei Auftreten des Auslösesignals in Richtung einer Sitzbefestigungseinrichtung (29) am Fahrzeugboden und/oder weg vom Lenkrad (30) bewegt.

6. Fahrzeuginsassen-Schutzsystem nach einem der vorangehenden Ansprüche,
**dadurch gekennzeichnet,**
**dass** der Sitz (20) in der im wesentlichen waagrechten Sitzfläche (24) im hinteren Bereich eine durch einen Aktuator nach unten bewegliche Einrichtung (28) aufweist, welche bei Auftreten des Auslösesignals eine Vertiefung im hinteren Bereich der Sitzfläche (24) erzeugt.

7. Fahrzeuginsassen-Schutzsystem nach einem der vorangehenden Ansprüche,
**dadurch gekennzeichnet,**
**dass** die im wesentlichen senkrechte Sitzfläche (23) auf das Auftreten des Auslösesignals hin seitlich ausfahrbare Sitzwangen (25) aufweist.

8. Fahrzeuginsassen-Schutzsystem nach einem der vorangehenden Ansprüche,
**dadurch gekennzeichnet,**
**dass** die Kopfstütze (21) einen integrierten Kragen (31) und/oder die Dachinnenseite des Fahrzeugs (11) über dem Sitz (20) ein versenktes Kopfschutzpolster aufweist, der/das bei Auftreten des Auslösesignals ausfährt.

9. Fahrzeuginsassen-Schutzsystem nach einem der vorangehenden Ansprüche,
**dadurch gekennzeichnet,**
**dass** die Sensoreinrichtung (10) an der Peripherie des Fahrzeugs (11) Radarsensoren und/oder Videosensoren und/oder laserscannerbasierte Sensoren und/oder IR-Sensoren, insbesondere zur Fahrzeugumfeldüberwachung in Fahrtrichtung und/oder entgegengesetzt der Fahrtrichtung, aufweist.

10. Verfahren zum Betätigen eines Insassenschutzsystems für Fahrzeuge:
Erfassen des Umfeldes des Fahrzeugs (11) mit zumindest einem Sensor (10) und daraus Erzeugen von Sensorsignalen;
Auswerten der Sensorsignale nach Maßgabe eines Algorithmus zur Früherkennung einer Gefahrensituation, vorzeitiges Erkennen einer sich nahenden Gefahrensituation und in diesem Fall Erzeugen eines Auslösesignals in einer Auswerteeinrichtung (12);
Verstellen eines Sitzes (20) mit einer Sitzverstelleinrichtung (22, 25, 26, 27, 28) mit mindestens einem Aktuator, **dadurch gekennzeichnet dass** die Sitzverstelleinrichtung (22, 25, 26, 27, 28) eine erste Geschwindigkeit zur Komforteinstellung des Sitzes (20) und eine zweite, höhere Geschwindigkeit zur Adaption des Sitzes (20) bei Ansteuerung mit dem Auslösesignal aufweist.

11. Verfahren nach Anspruch 10,
**dadurch gekennzeichnet,**
**dass** bei Auftreten des Auslösesignals der zumindest eine Aktuator den Sitz (20) mit der zweiten Geschwindigkeit in eine für einen Insassen sichere Lage bringt.

## Claims

1. Occupant protection system for vehicles having:
at least one sensor (10), which senses the surroundings of the vehicle (11) and generates sensor signals therefrom;
an evaluation device (12) which evaluates the sensor signals, and which detects in advance an imminent hazardous situation in accordance with an algorithm for the early detection of a hazardous situation, and in this case generates a triggering signal;
a seat adjustment device (22, 25, 26, 27, 28) with at least one actuator for adjusting a seat (20), **characterized in that** the seat adjustment device (22, 25, 26, 27, 28) has a first speed for a comfort setting of the seat (20) and a second, higher speed for adapting the seat (20) when actuated with the triggering signal.

2. Vehicle occupant protection system according to Claim 1, **characterized in that** the sitting surfaces (23, 24) and/or the headrest (21) of the seat (20) are each reversibly deformable with the second speed as a function of the sensor signals evaluated by an evaluation device (12), and/or the position of the seat with respect to a steering wheel (30) can be set reversibly.

3. Vehicle occupant protection system according to one of the preceding claims, **characterized in that** the at least one actuator (22, 25, 26, 27, 28) is formed by a pneumatic system, a high-speed electric motor or a mechanical spring device which can be tensioned by electric motor and which preferably moves the seat into a predetermined end position in less than 1 second.

4. Vehicle occupant protection system according to one of the preceding claims, **characterized in that** a seat wedge (27) is provided at the front end of the essentially horizontal sitting surface (24) and deforms the sitting surface (24) upwards when the triggering signal occurs.

5. Vehicle occupant protection system according to one of the preceding claims, **characterized in that** the seat (20) has an actuator (22) which moves the seat (20) in the direction of a seat attachment device (29) on the vehicle floor and/or away from the steering wheel (30) when the triggering signal occurs.

6. Vehicle occupant protection system according to one of the preceding claims, **characterized in that** the seat (20) has, in the rear region of the essentially horizontal sitting surface (24), a device (28) which can be moved downwards by means of an actuator and which generates a depression in the rear region of the sitting surface (24) when the triggering signal occurs.

7. Vehicle occupant protection system according to one of the preceding claims, **characterized in that** the essentially perpendicular sitting surface (23) has lateral seat elements (25) which can be extended laterally in response to the occurrence of the triggering signal.

8. Vehicle occupant protection system according to one of the preceding claims, **characterized in that** the headrest (21) has an integrated collar (31) and/or the inside of the roof of the vehicle (11) has a countersunk head protection cushion element above the seat (20), which collar (31) or head protection cushion element is extended when the triggering signal occurs.

9. Vehicle occupant protection system according to one of the preceding claims, **characterized in that** the sensor device (10) has, on the periphery of the vehicle (11), radar sensors and/or video sensors and/or laser-scanner-based sensors and/or IR sensors, in particular for monitoring the surroundings of the vehicle in the direction of travel and/or in the opposite direction to the direction of travel.

10. Method for activating an occupant protection system for vehicles:
sensing the surroundings of the vehicle (11) with at least one sensor (10) and generating sensor signals therefrom;
evaluating the sensor signals in accordance with an algorithm for the early detection of a hazardous situation, advanced detection of an imminent hazardous situation and in this case generation of a triggering signal in an evaluation device (12);
adjusting a seat (20) with a seat adjustment device (22, 25, 26, 27, 28) with at least one actuator, **characterized in that** the seat adjustment device (22, 25, 26, 27, 28) has a first speed for a comfort setting of the seat (20) and a second, higher speed for adapting the seat (20) when actuated with the triggering signal.

11. Method according to Claim 10, **characterized in that** when the triggering signal occurs the at least one actuator moves the seat (20) at the second speed into a position which is safe for a vehicle occupant.

## Revendications

1. Système de protection pour un occupant d'un véhicule, avec :
- au moins un détecteur (10) de l'environnement du véhicule (11) qui produit des signaux à partir de celui-ci ;
- un dispositif d'exploitation (12), des signaux du détecteur, qui reconnaît de façon précoce une situation de danger imminente en application d'un algorithme de reconnaissance précoce d'une situation de danger, et produit dans ce cas un signal de déclenchement ;
- un dispositif de déplacement de siège (22, 25, 26, 27, 28) avec au moins un actionneur pour le déplacement d'un siège (20),
**caractérisé en ce que**
le dispositif de déplacement de siège (22, 25, 26, 27, 28) présente une première vitesse pour le réglage de confort du siège (20) et une deuxième vitesse, plus élevée, pour l'adaptation du siège (20) en cas de commande par le signal de déclenchement.

2. Système de protection pour un occupant d'un véhicule selon la revendication 1,
**caractérisé en ce que**
les surfaces de siège (23, 24) et/ou les appuie-tête (21) du siège (20) sont déformables de façon réversible avec la deuxième vitesse en fonction des signaux de détecteur exploités par le dispositif d'exploitation (12), et/ou la position du siège par rapport au volant de direction (30) peut être réglée de façon réversible.

3. Système de protection pour un occupant d'un véhicule selon l'une des revendications précédentes,
**caractérisé en ce que**
l'au moins un actionneur (22, 25, 26, 27, 28) est formé par un système pneumatique, un moteur électrique à grande vitesse ou un dispositif de suspension mécanique extensible électromotirisé, qui amène le siège dans une position finale prédéterminée, de préférence en moins de 1 seconde.

4. Système de protection pour un occupant d'un véhicule selon l'une des revendications précédentes,
**caractérisé en ce qu'**
un coin de siège (27) à l'extrémité avant de la surface de siège (24) essentiellement horizontale, qui déforme la surface de siège (24) vers le haut lors de la survenue du signal de déclenchement.

5. Système de protection pour un occupant d'un véhicule selon l'une des revendications précédentes,
**caractérisé en ce que**
le siège (20) comporte un actionneur (22), qui déplace le siège (20) en direction d'un dispositif de fixation de siège (29) au plancher du véhicule et/ou loin du volant de direction (30) lors de la survenue du signal de déclenchement.

6. Système de protection pour un occupant d'un véhicule selon l'une des revendications précédentes,
**caractérisé en ce que**
le siège (20) comporte, dans la partie arrière de la surface de siège (24) essentiellement horizontale, un dispositif (28) déplaçable vers le bas par un actionneur, qui provoque un creux dans la partie arrière de la surface de siège (24) lors de la survenue du signal de déclenchement.

7. Système de protection pour un occupant d'un véhicule selon l'une des revendications précédentes,
**caractérisé en ce que**
la surface de siège (23) essentiellement verticale comporte des joues (25) extensibles latéralement lors de la survenue du signal de déclenchement.

8. Système de protection pour un occupant d'un véhicule selon l'une des revendications précédentes,
**caractérisé en ce que**
les appuie-tête (21) comprennent un collier intégré (31) et/ou la face intérieure du toit du véhicule (11) présente un coussin de protection de la tête logé au-dessus du siège (20), qui se déploie lors de la survenue du signal de déclenchement.

9. Système de protection pour un occupant d'un véhicule selon l'une des revendications précédentes,
**caractérisé en ce que**
le détecteur (10) comprend à la périphérie du véhicule (11) des détecteurs radar et/ou des détecteurs vidéo et/ou des détecteurs basés sur un balayage laser et/ou des détecteurs IR, en particulier pour la surveillance de l'environnement du véhicule dans le sens de la marche et/ou dans le sens contraire au sens de la marche.

10. Procédé pour actionner un système de protection d'un occupant pour véhicule, comprenant :
- la détection de l'environnement du véhicule (11) avec au moins un détecteur (10) et la production, de signaux à partir de celui-ci,
- l'exploitation des signaux du détecteur en application d'un algorithme de reconnaissance précoce d'une situation de danger, entraîne la reconnaissance précoce d'une situation de danger imminente et dans ce cas, la production d'un signal de déclenchement dans un dispositif d'exploitation (12) ;
- le déplacement d'un siège (20) par un dispositif de déplacement de siège (22, 25, 26, 27, 28) avec au moins un actionneur,
**caractérisé en ce que**
le dispositif de déplacement de siège (22, 25, 26, 27, 28) présente une première vitesse pour le déplacement de confort du siège (20) et une deuxième vitesse, plus élevée, pour l'adaptation du siège (20) en cas de commande par le signal de déclenchement.

11. Procédé selon la revendication 10,
**caractérisé en ce que**
lors de la survenue du signal de déclenchement, l'au moins un actionneur amène le siège (20) avec la deuxième vitesse dans une position sûre pour un occupant.
